# EUROPÄISCHE PATENTSCHRIFT

(11) **EP 4 260 036 B1**
(45) Veröffentlichungstag und Bekanntmachung des Hinweises auf die Patenterteilung: **07.01.2026**
(21) Anmeldenummer: 21823217.1
(22) Anmeldetag: 26.11.2021
(51) Int. Cl.: G01L 13/02, G01L 19/00, G01L 19/06, G01L 19/14

(54) **VERFAHREN ZUM HERSTELLEN EINES DIFFERENZDRUCKMESSAUFNEHMERS UND ENTSPRECHENDER DIFFERENZDRUCKMESSAUFNEHMER**
METHOD FOR PRODUCING A DIFFERENTIAL PRESSURE SENSOR AND CORRESPONDING DIFFERENTIAL PRESSURE SENSOR
PROCÉDÉ DE FABRICATION D'UN CAPTEUR DE PRESSION DIFFÉRENTIELLE ET CAPTEUR DE PRESSION DIFFÉRENTIELLE CORRESPONDANT

(30) Priorität: 11.12.2020 DE 102020133204
(43) Veröffentlichungstag der Anmeldung: 18.10.2023
(73) Patentinhaber: Endress+Hauser SE+Co. KG, 79689 Maulburg (DE)
(72) Erfinder: DORIA, Patrick, 13407 Berlin (DE)
(74) Vertreter: Endress + Hauser Group Services (Deutschland) AG+Co. KG
(86) Internationale Anmeldenummer: PCT/EP2021/083100
(87) Internationale Veröffentlichungsnummer: WO 2022/122409

(56) Entgegenhaltungen:
- CN-U- 208 818 407
- CN-U- 210 464 778
- DE-A1- 102018 121 446
- US-A- 4 019 388

## Beschreibung

Die Erfindung betrifft ein Verfahren zum Herstellen eines Differenzdruckmessaufnehmers, sowie einen damit hergestellten Differenzdruckmessaufnehmer.

Differenzdruckmessaufnehmer werden in der industriellen Messtechnik zur Messung von Differenzdrücken eingesetzt. So dienen Differenzdruckmessgeräte insbesondere zur kontinuierlichen Messung von Druckdifferenzen in Messmedien, z.B. in Flüssigkeiten, Dämpfen, Gasen und Stäuben. Aus dem Differenzdruck kann beispielsweise der Füllstand eines Füllguts in einem Behälter oder der Durchfluss eines Messmediums durch eine Rohrleitung ermittelt werden.

In der Druckmesstechnik werden häufig so genannte Halbleiter-Sensoren, z.B. Silizium-Chips mit eindotierten Widerstandselementen, als druckempfindliche Elemente eingesetzt. Entsprechende Differenzdrucksensoren weisen typischerweise eine Messmembran auf, deren erste Fläche im Messbetrieb einem ersten Druck und deren zweite Fläche einem zweiten Druck ausgesetzt wird. Die auf die beiden Flächen einwirkenden Drücke bewirken eine resultierende Auslenkung der Messmembran, die dem zu messenden Differenzdruck entspricht. Drucksensor-Chips sind in der Regel sehr empfindlich und werden deshalb nicht direkt einem Medium ausgesetzt, dessen Druck aufgenommen werden soll. Stattdessen wird der erste Druck und der zweite Druck von der ersten Trennmembran und zweiten Trennmembran mithilfe einer Druckübertragungsflüssigkeit zu den beiden Flächen des Differenzdrucksensors übertragen. Zusätzlich wird mitunter ein Überlastschutz in Form einer Überlastmembran eingesetzt, um den Differenzdrucksensor vor zu hohen Drücken zu schützen.

Differenzdruckmessaufnehmer bestehen aus einer Vielzahl von Einzelkomponenten, die in der Regel sequenziell und per Handarbeit in den Differenzdruckmessaufnehmer integriert werden. Eine zumindest teilweise Automatisierung der einzelnen Schritte wäre wünschenswert, ist mit gängigen Designs des Differenzdruckmessaufnehmers aber häufig schwierig umsetzbar. Aus der unveröffentlichten Patentanmeldung DE 10 2019 132 867 ist ein vereinfachtes Konzept eines Differenzdruckmessaufnehmers bekannt geworden. Der Differenzdruckmessaufnehmer besteht im Wesentlichen aus einer Sensorbaugruppe, welche zumindest einen Differenzdrucksensor aufweist, und einen Grundkörper, auf welchem zwei Trennmembranen und eine optionale Überlastmembran angeordnet sind. Die Sensorbaugruppe wird in eine Ausnehmung des Grundkörpers eingebracht und mit Hilfe eines

Schweißrings eingeschweißt. Die Patentanmeldungen CN 208 818 407 U und DE 10 2018 121446 A1 offenbaren weitere Differenzdrucksensoren mit einem Messwerk, das Trenn- und Überlastmembranen trägt.

Die Aufgabe der vorliegenden Erfindung ist es daher, einen modular aufgebauten Differenzdruckmessaufnehmer vorzuschlagen, welcher einfacher und günstiger herstellbar ist als vergleichsbare Differenzdruckmessaufnehmer, sowie ein entsprechenden Verfahren zur Herstellung eines solchen Differenzdruckmessaufnehmers.

Die Aufgabe wird erfindungsgemäß gelöst durch ein Verfahren zum Herstellen eines Differenzdruckmessaufnehmers mit zumindest folgenden Verfahrensschritten:
- Bereitstellen eines im Wesentlichen rotationssymmetrischen elektronischen Moduls, wobei das elektronische Modul bereitgestellt wird mit zumindest
   ∘ einem Grundkörper, wobei eine äußere Mantelfläche des Grundkörpers als ein mit einem Gehäuse korrespondierenden Gehäuseadapter hergestellt wird,
   ∘ einer Elektronikeinheit, welche in einem Innenraum des Grundkörpers bereitgestellt wird,
   ∘ einem Differenzdrucksensor zum Bestimmen eines sich zwischen einem ersten Druck p1 und einem zweiten Druck p2 ergebenden Differenzdrucks,
- Bereitstellen eines mechanischen Moduls, wobei das mechanische Modul bereitgestellt wird mit zumindest
   ∘ einem Messwerk, wobei eine erste Trennmembran und eine zweite Trennmembran auf dem Messwerk bereitgestellt werden, wobei die erste Trennmembran mit dem ersten Druck p1 und die zweite Trennmembran mit dem zweiten Druck p2 beaufschlagt werden,
   ∘ einer im Wesentlichen rotationssymmetrischen Ausnehmung des Messwerks für die Aufnahme des elektronischen Moduls, wobei eine innere Kontur der Ausnehmung mit einer äußeren Kontur des elektronischen Moduls derart abgestimmt wird, dass das elektronische Modul in die Ausnehmung einführbar ist,
- Einbringen des elektronischen Moduls in die Ausnehmung des mechanischen Moduls, wobei das elektronische Modul in die Ausnehmung eingeführt wird, bis eine Auflagefläche des elektronischen Moduls auf eine Anschlagfläche des mechanischen Moduls trifft,
- Einschweißen oder Einkleben des elektronischen Moduls in das mechanische Modul, wobei zumindest die Auflagefläche mit der Anschlagfläche verschweißt oder verklebt wird,
- Axiales Schweißen in einem Mündungsbereich der Ausnehmung, so dass das mechanische Modul mittels der Schweißung umlaufend mit dem elektronischen Moduls verschweißt wird,
- Befüllen von mindestens zwei Druckübertragungsleitungen mit einer Druckübertragungsflüssigkeit, wobei die mindestens zwei Druckübertragungsleitungen für die Übertragung des ersten Drucks p1 und des zweiten Drucks p2 jeweils von der ersten Trennmembran und der zweiten Trennmembran zu zwei gegenüberliegenden Flächen des Differenzdrucksensors bereitgestellt werden, und
- Aufsetzen des Gehäuses auf den Gehäuseadapter.

Das erfindungsgemäße Verfahren sieht vor, dass ein elektronisches Modul und ein mechanisches Modul bereitgestellt werden, welche voneinander unabhängig gefertigt werden können und alle wesentlichen Komponenten des Differenzdruckmessaufnehmers enthalten. Anschließend wird das elektronische Modul in das mechanische Modul eingesetzt und die beiden Module werden, vorzugsweise durch Schweißungen, aber auch durch Klebungen, miteinander verbunden. Die Verbindung der Anschlagfläche mit der Auflagefläche erfolgt bevorzugt mittels Widerstandsschweißen. Anschließend muss der Differenzdruckmessaufnehmer noch mit der Druckübertragungsflüssigkeit, in der Regel Silikonöl, befüllt werden, und das Gehäuse auf den Gehäuseadapter aufgebracht werden. Das Gehäuse dient zum Schutz der Elektronik und weist vorzugweise eine Anzeigeeinheit auf.

Durch die Modularisierung des Differenzdruckmessaufnehmers können das elektronische und das mechanische Modul parallel und zeitgleich hergestellt werden und werden anschließend innerhalb weniger Schritte zu einem vollständigen Differenzdruckmessaufnehmer zusammengebaut.

In einer Weiterbildung des erfindungsgemäßen Verfahrens wird das elektronische Modul aus einer Glas-Metall-Durchführung hergestellt.

In einer weiteren Weiterbildung des erfindungsgemäßen Verfahrens wird das elektronische Modul mit einer, vorzugsweise zusätzlich aufgebrachten, keramischen, Sockelscheibe hergestellt, wobei vor dem Bereitstellen des elektronischen Moduls der Differenzdrucksensor auf die Sockelscheibe aufgebracht wird. Die Sockelscheibe dient beispielsweise als Träger für den Differenzdrucksensor und zur Reduzierung mechanischer Einflüsse auf diesen.

Eine weitere Weiterbildung des erfindungsgemäßen Verfahrens sieht vor, dass das elektronische Modul mit zumindest einem, vorzugsweise zusätzlich aufgebrachten, Isolierkörper hergestellt wird, wobei vor dem Bereitstellen des elektronischen Moduls der Isolierkörper auf den Differenzdrucksensor aufgebracht wird. Der Isolierkörper schützt den Differenzdrucksensor insbesondere vor elektrischen Fremdeinflüssen.

Bevorzugterweise wird das mechanische Modul mit einer Überlastmembran im Messwerk bereitgestellt. Dabei wird vor dem Bereitstellen des mechanischen Moduls die erste Trennmembran auf einer ersten Außenseite des Messwerks angeschweißt und die zweite Trennmembran zunächst vorzugsweise auf einem Träger angeschweißt wird, welcher anschließend auf einer der ersten Außenseite gegenüberliegenden zweiten Außenseite des Messwerks angeschweißt wird.

Die Aufgabe wird ferner gelöst durch einen Differenzdruckmessaufnehmer, welcher mittels des erfindungsgemäßen Verfahrens hergestellt wird. Der erfindungsgemäße Differenzdruckmessaufnehmer ist aufgrund seines modularen Konzepts einfacher und kostengünstiger herstellbar als herkömmliche Differenzdruckmessaufnehmer. Insbesondere werden die beiden Module, das elektronische und das mechanische, unabhängig voneinander gefertigt.

Die Erfindung wird im Folgenden anhand der nachfolgenden Figuren Fig. 1-5 näher erläutert. Sie zeigen:
Fig. 1: eine schematische Ausgestaltung des elektronischen Moduls.
Fig. 2: eine schematische Ausgestaltung des mechanischen Moduls.
Fig. 3: eine schematische Ausgestaltung des erfindungsgemäßen Differenzdruckmessaufnehmers.
Fig. 4: eine erste schematische Darstellung des erfindungsgemäßen Verfahrens.
Fig. 5: eine zweite schematische Darstellung des erfindungsgemäßen Verfahrens.

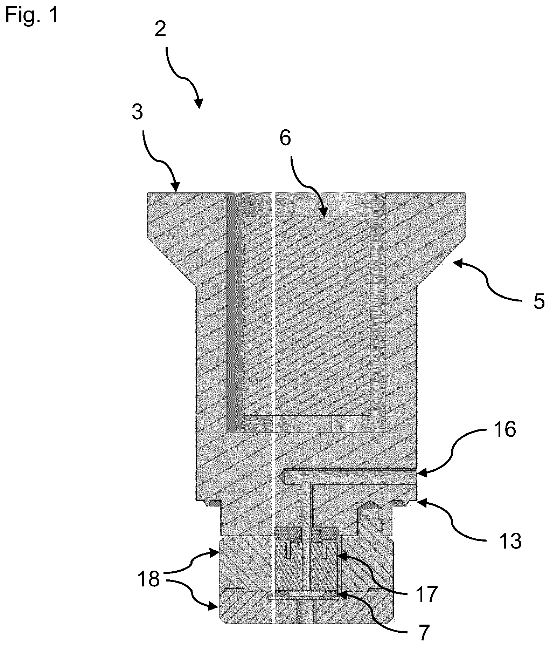

In Figur Fig. 1 ist eine schematische Ausgestaltung des elektronischen Moduls 2 des erfindungsgemäßen Differenzdruckmessaufnehmers 1 dargestellt. Das elektronische Modul 2 ist im Wesentlichen rotationssymmetrisch und besteht beispielsweise aus einer Glas-Metall-Durchführung. Am Grundkörper 3 des elektronischen Moduls 2 ist der Differenzdrucksensor 7 angebracht. Beispielhaft ist der Differenzdrucksensor auf eine Sockelscheibe 17 aufgebracht worden, beispielsweise mittels Bonden. Zudem ist optional ein Isolierkörper 18 angebracht, um den Differenzdrucksensor 7 vor unerwünschten elektronischen Einflüssen zu schützen. **In** einen Innenraum des elektronischen Moduls 2 ist eine Elektronikeinheit 6 eingebracht, welche mit dem Differenzdrucksensor 7 in Kontakt steht. Weiterhin ist eine äußere Mantelfläche des elektronischen Moduls 2 als ein Gehäuseadapter 5 ausgeformt, so dass nach einem Zusammenbau des elektronischen Moduls 2 mit dem mechanischen Modul 8 das Gehäuse 4 auf den damit korrespondierenden Gehäuseadapter 5 aufgesetzt werden kann. Durch das elektronische Modul 2 führen weiterhin Druckübertragungsleitungen 16, um den Differenzdrucksensor 7 mit dem ersten Druck p1 und dem zweiten Druck p2 zu beaufschlagen. Die Auflagefläche 13 dient nachher dazu, das elektronische Modul 2 bis zu einer definierten Tiefe in die Ausnehmung 12 des mechanischen Moduls 8 einzubringen. Das elektronische Modul 2 wird zunächst separat gefertigt und dem weiteren Herstellungsprozess des Differenzdruckmessaufnehmers 1 bereitgestellt.

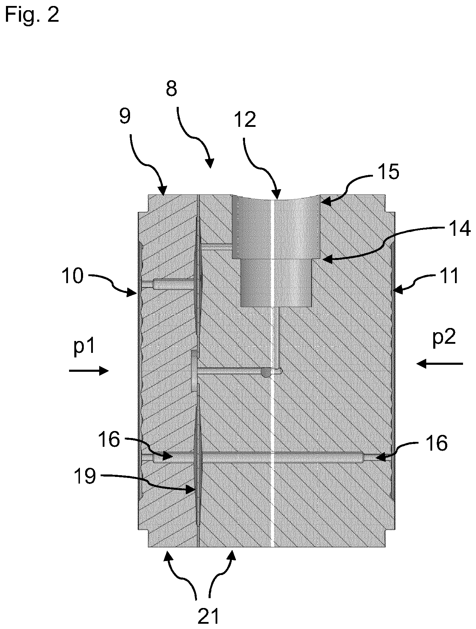

Das bereitgestellte mechanische Modul 8 ist in einer beispielhaften Ausgestaltung in Fig. 2 dargestellt. Am Messwerk 9 besteht beispielsweise aus zwei Trägerscheiben 21, auf welchen jeweils die zweite Trennmembran 11 und die erste Trennmembran 10 angeschweißt sind. Die beiden Trägerschreiben 21 bilden das Messwerk 9 des mechanischen Moduls 8, welches weiterhin eine optionale Überlastmembran 19 aufweist, welche zwischen den beiden Trägerscheiben 21 eingeschweißt ist. Druckübertragungsleitungen 16 führen jeweils von der ersten Trennmembran 10 und der zweiten Trennmembran 11 über die Überlastmembran 19 zum Differenzdrucksensor 7, um diesen mit dem ersten Druck p1 und dem zweiten Druck p2 zu beaufschlagen und daraus einen Differenzdruck zu bestimmen. Die im Wesentlichen rotationssymmetrische Ausnehmung 12 dient zur Aufnahme des elektronischen Moduls 2. Die Anschlagfläche 14 definiert in Kombination mit der Auflagefläche 13 eine Tiefe, bis zu dieser das elektronische Modul 2 in das mechanische Modul 8 eingeführt werden kann

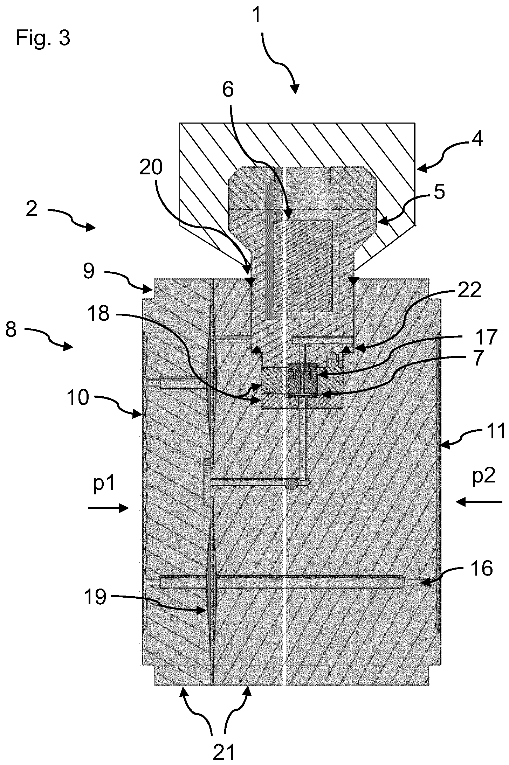

In Figur Fig. 3 ist eine mögliche Ausgestaltung des erfindungsgemäßen Differenzdrucknehmers 1 gezeigt. Das elektronische Modul 2 wurde in die Ausnehmung 12 des mechanischen Moduls 8 eingeführt, bis die Anschlagfläche 14 auf die Auflagefläche 13 trifft. Die beiden Module 2,8 werden an zwei Stellen miteinander verschweißt, um die beiden Druckseiten voneinander zu trennen: einmal im Bereich der Anschlag- und Auflagefläche 13,14, siehe die Schweißnaht 22, und einmal im Mündungsbereich der Ausnehmung 12, welches die axiale Schweißnaht 20 ergibt. Die Anschlagfläche 14 kann alternativ mit der Auflagefläche 13 verklebt werden. Am Gehäuseadapter 5 ist letztlich das Gehäuse 4 angebracht.

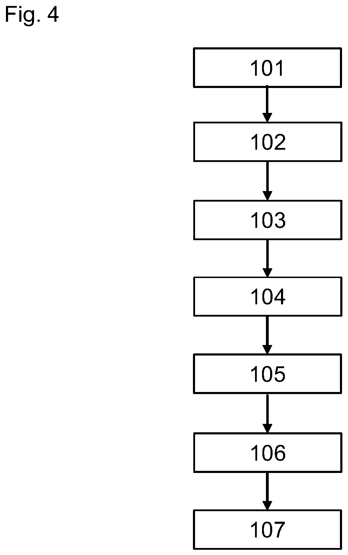

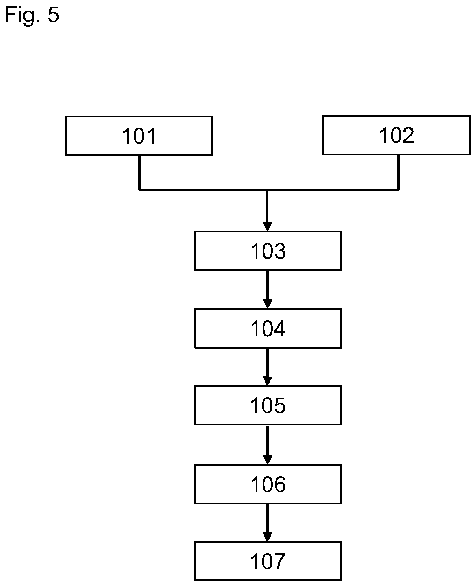

In Figur Fig. 4 ist das erfindungsgemäße Verfahren schematisch dargestellt. Im ersten Schritt 101 wird das elektronische Modul 2 bereitgestellt, welches wie in Fig. 1 gezeigt, mit einem Grundkörper 3, einem Gehäuseadapter 5, einer Elektronikeinheit 6 im Innenraum des Grundkörpers 3 sowie dem Differenzdrucksensor 7 hergestellt wurde. Im zweiten Schritt 102 wird das mechanische Modul 8 bereitgestellt, welches entsprechend der Ausgestaltung in Fig. 2 mit einem Messwerk 9 und zwei darauf vorgesehenen Trennmembranen 10,11, sowie der Ausnehmung 12 hergestellt wurde. Der erste Schritt 101 und der zweite Schritt 102 können dabei gleichzeitig beginnen, so dass das elektronische Modul 2 und das mechanische Modul 8 parallel hergestellt und bereitgestellt werden, wie in Fig. 5 schematisch dargestellt.

Da die äußere Kontur des elektronischen Moduls 2 mit der inneren Kontur der Ausnehmung 12 so abgestimmt ist, dass das elektronische Modul 2 in die Ausnehmung 12 einführbar ist, erfolgt nun im dritten Schritt 103 das Einbringen des elektronischen Moduls 2 in die Ausnehmung 12 des mechanischen Moduls 8. Das elektronische Modul 2 wird dabei so tief in die Ausnehmung 12 eingebracht, bis die Auflagefläche 13 auf die Anschlagfläche 14 des mechanischen Moduls 8 trifft.

Im vierten Schritt 104 des erfindungsgemäßen Verfahrens wird zumindest die Auflagefläche 13 des elektronischen Moduls 2 mit der Anschlagfläche 14 verschweißt oder verklebt. Im fünften Schritt 105 wird das elektronische Modul 2 mit dem mechanischen Modul 8 im Mündungsbereich 15 der Ausnehmung 12 axial und umlaufend verschweißt. Da die beiden Druckseiten nun voneinander getrennt sind, kann im sechsten Schritt 106 das Befüllen der mindestens zwei Druckübertragungsleitungen 16 mit einer Druckübertragungsflüssigkeit erfolgen. Im letzten Schritt 107 wird schließlich das Gehäuse 4 auf den Gehäuseadapter 5 aufgesetzt.

### Bezugszeichenliste

- 1: Differenzdruckmessaufnehmer
- 2: elektronisches Modul
- 3: Grundkörper
- 4: Gehäuse
- 5: Gehäuseadapter
- 6: Elektronikeinheit
- 7: Differenzdrucksensor
- 8: mechanisches Modul
- 9: Messwerk
- 10: erste Trennmembran
- 11: zweite Trennmembran
- 12: Ausnehmung
- 13: Auflagefläche
- 14: Anschlagfläche
- 15: Mündungsbereich der Ausnehmung
- 16: Druckübertragungsleitungen
- 17: Sockelscheibe
- 18: Isolierkörper
- 19: Überlastmembran
- 20: axiale Schweißnaht
- 21: Trägerscheibe
- 22: Schweißnaht zwischen Anschlags- und Auflagefläche

## Patentansprüche

1. Verfahren zum Herstellen eines Differenzdruckmessaufnehmers (1) mit zumindest folgenden Verfahrensschritten:
- Bereitstellen eines im Wesentlichen rotationssymmetrischen elektronischen Moduls (2), wobei das elektronische Modul (2) bereitgestellt wird mit zumindest
∘ einem Grundkörper (3), wobei eine äußere Mantelfläche des Grundkörpers (3) als ein mit einem Gehäuse (4) korrespondierenden Gehäuseadapter (5) hergestellt wird,
∘ einer Elektronikeinheit (6), welche in einem Innenraum des Grundkörpers (3) bereitgestellt wird,
∘ einem Differenzdrucksensor (7) zum Bestimmen eines sich zwischen einem ersten Druck (p1) und einem zweiten Druck (p2) ergebenden Differenzdrucks,
- Bereitstellen eines mechanischen Moduls (8), wobei das mechanische Modul (8) bereitgestellt wird mit zumindest
∘ einem Messwerk (9), wobei eine erste Trennmembran (10) und eine zweite Trennmembran (11) auf dem Messwerk (9) bereitgestellt werden, wobei die erste Trennmembran (10) mit dem ersten Druck (p1) und die zweite Trennmembran (11) mit dem zweiten Druck (p2) beaufschlagt werden,
∘ einer im Wesentlichen rotationssymmetrischen Ausnehmung (12) des Messwerks (9) für die Aufnahme des elektronischen Moduls (2), wobei eine innere Kontur der Ausnehmung (12) mit einer äußeren Kontur des elektronischen Moduls (2) derart abgestimmt wird, dass das elektronische Modul (2) in die Ausnehmung (12) einführbar ist,
- Einbringen des elektronischen Moduls (2) in die Ausnehmung (12) des mechanischen Moduls (8), wobei das elektronische Modul (2) in die Ausnehmung (12) eingeführt wird, bis eine Auflagefläche (13) des elektronischen Moduls (2) auf eine Anschlagfläche (14) des mechanischen Moduls (8) trifft,
- Einschweißen und/oder Einkleben des elektronischen Moduls (2) in das mechanische Modul (8), wobei zumindest die Auflagefläche (13) mit der Anschlagfläche (14) verschweißt oder verklebt wird,
- Axiales Schweißen in einem Mündungsbereich (15) der Ausnehmung (12), so dass das mechanische Modul (8) mittels der Schweißung umlaufend mit dem elektronischen Moduls (2) verschweißt wird,
- Befüllen von mindestens zwei Druckübertragungsleitungen (16) mit einer Druckübertragungsflüssigkeit, wobei die mindestens zwei Druckübertragungsleitungen (16) für die Übertragung des ersten Drucks (p1) und des zweiten Drucks (p2) jeweils von der ersten Trennmembran (10) und der zweiten Trennmembran (11) zu zwei gegenüberliegenden Flächen des Differenzdrucksensors (7) bereitgestellt werden, und
- Aufsetzen des Gehäuses (4) auf den Gehäuseadapter (5).

2. Verfahren zum Herstellen eines Differenzdruckmessaufnehmers (1) nach Anspruch 1,
wobei das elektronische Modul (2) aus einer Glas-Metall-Durchführung hergestellt wird.

3. Verfahren zum Herstellen eines Differenzdruckmessaufnehmers (1) nach mindestens einem der vorherigen Ansprüche,
wobei das elektronische Modul (2) mit einer, vorzugsweise zusätzlich aufgebrachten, keramischen, Sockelscheibe (17) hergestellt wird,
wobei vor dem Bereitstellen des elektronischen Moduls (2) der Differenzdrucksensor (7) auf die Sockelscheibe (17) aufgebracht wird.

4. Verfahren zum Herstellen eines Differenzdruckmessaufnehmers (1) nach mindestens einem der vorherigen Ansprüche,
wobei das elektronische Modul (2) mit mindestens einem, vorzugsweise zusätzlich aufgebrachten, Isolierkörper (18) hergestellt wird, wobei vor dem Bereitstellen des elektronischen Moduls (2) der Isolierkörper (18) auf den Differenzdrucksensor (7) aufgebracht wird.

5. Verfahren zum Herstellen eines Differenzdruckmessaufnehmers (1) nach mindestens einem der vorherigen Ansprüche,
wobei das mechanische Modul (8) mit einer Überlastmembran (19) im Messwerk (9) bereitgestellt wird.

6. Differenzdruckmessaufnehmer (1) hergestellt nach einem Verfahren nach zumindest einem der vorhergehenden Ansprüche.

## Claims

1. Method for manufacturing a differential pressure sensor (1) with at least the following steps:
- Providing a substantially rotationally symmetrical electronic module (2), wherein the electronic module (2) is provided with at least
∘ a base body (3), wherein an outer surface of the base body (3) is provided as a housing (4)
corresponding housing adapter (5),
∘ an electronics unit (6) provided in an interior space of the base body (3),
∘ a differential pressure sensor (7) for determining a pressure difference between a first pressure (p1) and a second pressure
(p2),
- provision of a mechanical module (8), wherein the mechanical module (8) is provided with at least
∘ a measuring mechanism (9), wherein a first separating membrane (10) and a second separating membrane (11) are provided on the measuring mechanism (9),
wherein the first separating membrane (10) is subjected to the first pressure (p1) and the second separating membrane (11) is subjected to the second pressure (p2),
o a substantially rotationally symmetrical recess (12) of the measuring mechanism (9) for accommodating the electronic module (2), wherein an inner contour of the recess (12) is matched to an outer contour of the electronic module (2) in such a way that the electronic module (2) can be inserted into the recess (12),
- Insertion of the electronic module (2) into the recess (12) of the mechanical module (8), whereby the electronic module (2) is inserted into the recess (12) until a support surface (13) of the electronic module (2) meets a stop surface (14) of the mechanical module (8),
- Welding and/or gluing the electronic module (2) into the mechanical module (8), whereby at least the support surface (13) is welded or glued to the stop surface (14),
- Axial welding in a mouth area (15) of the recess (12) so that the mechanical module (8) is welded circumferentially to the electronic module (2) by means of the weld,
- Filling at least two pressure transmission lines (16) with a pressure transmission fluid, wherein the at least two pressure transmission lines (16) are provided for transmitting the first pressure (p1) and the second pressure (p2) from the first separating membrane (10) and the second separating membrane (11), respectively, to two opposite surfaces of the differential pressure sensor (7), and
- placing the housing (4) on the housing adapter (5).

2. Method for manufacturing a differential pressure sensor (1) according to claim 1,
wherein the electronic module (2) consists of a glass-to-metal seal.

3. Method for manufacturing a differential pressure sensor (1) according to at least one of the previous claims,
wherein the electronic module (2) is equipped with a preferably additional ceramic base plate (17) is provided, wherein the differential pressure sensor (7) is applied to the base plate (17) before the electronic module (2) is provided.

4. Method for manufacturing a differential pressure sensor (1) according to at least one of the previous claims,
wherein the electronic module (2) is manufactured with at least one, preferably additionally applied, insulating body (18), wherein the insulating body (18) is applied to the differential pressure sensor (7) before the electronic module (2) is provided.

5. Method for manufacturing a differential pressure sensor (1) according to at least one of the preceding claims,
wherein the mechanical module (8) is provided with an overload diaphragm (19) in the measuring mechanism (9).

6. Differential pressure sensor (1) manufactured according to a method according to at least one of the preceding claims.

## Revendications

1. Procédé de fabrication d'un capteur de pression différentielle (1) comprenant au moins les étapes suivantes :
- fourniture d'un module électronique (2) essentiellement symétrique en rotation, le module électronique (2) étant fourni avec au moins
∘ un corps de base (3), une surface d'enveloppe extérieure du corps de base (3) étant conçue comme une surface d'enveloppe extérieure (3a) pour un boîtier (4),
∘ une unité électronique (6) qui est prévue dans un espace intérieur du corps de base (3),
∘ un capteur de pression différentielle (7) pour déterminer une pression différentielle entre une première pression (p1) et une deuxième pression
(p2),
- la mise à disposition d'un module mécanique (8), le module mécanique (8) étant prévu avec au moins
∘ un mécanisme de mesure (9), une première membrane de séparation (10) et une deuxième membrane de séparation (11) étant prévues sur le mécanisme de mesure (9)
, la première membrane de séparation (10) étant soumise à la première pression (p1) et la deuxième membrane de séparation (11) étant soumise à la deuxième pression (p2),
∘ un évidement (12) sensiblement symétrique en rotation (12) du mécanisme de mesure (9) destiné à recevoir le (2), un contour intérieur de l'évidement (12) étant adapté à un contour extérieur du module électronique (2) de telle sorte que le module électronique (2) puisse être inséré dans l'évidement (12),
- Insertion du module électronique (2) dans l'évidement (12) du module mécanique (8), le module électronique (2) étant inséré dans l'évidement (12) jusqu'à ce qu'une surface d'appui (13) du module électronique (2) rencontre une surface de butée (14) du module mécanique (8),
- soudage et/ou collage du module électronique (2) dans le module mécanique (8), au moins la surface d'appui (13) étant soudée ou collée à la surface de butée (14),
- Soudage axial dans une zone d'embouchure (15) de la évidement (12), de sorte que le module mécanique (8) est soudé de manière circonférentielle au module électronique (2) au moyen de la soudure,
- remplissage d'au moins deux conduites de transmission de pression (16) avec un fluide de transmission de pression, les au moins deux conduites de transmission de pression (16) étant prévues pour la transmission de la première pression (p1) et de la deuxième pression (p2) respectivement depuis la première membrane de séparation (10) et la deuxième membrane de séparation (11) vers deux surfaces opposées du capteur de pression différentielle (7), et
- mise en place du boîtier (4) sur l'adaptateur de boîtier (5).

2. Procédé de fabrication d'un capteur de pression différentielle (1) selon la revendication 1,
le module électronique (2) étant constitué d'un passage verre-métal.

3. Procédé de fabrication d'un capteur de pression différentielle (1) selon au moins l'une des revendications précédentes,
le module électronique (2) étant équipé d'un, de préférence en plus appliquée, et le capteur de pression différentielle (7) étant appliqué sur la rondelle de base (17) avant la mise à disposition du module électronique (2).

4. Procédé de fabrication d'un capteur de pression différentielle (1) selon au moins l'une des revendications précédentes,
le module électronique (2) étant fabriqué avec au moins un corps isolant (18), de préférence appliqué en supplément, le corps isolant (18) étant appliqué sur le capteur de pression différentielle (7) avant la mise à disposition du module électronique (2).

5. Procédé de fabrication d'un capteur de pression différentielle (1) selon au moins l'une des revendications précédentes,
le module mécanique (8) étant fourni avec une membrane de surcharge (19) dans le mécanisme de mesure (9).

6. Capteur de pression différentielle (1) fabriqué selon un procédé selon au moins l'une des revendications précédentes.
